# FASCICULE DE BREVET EUROPEEN

(11) **EP 1 483 210 B1**
(45) Date de publication et mention de la délivrance du brevet: **09.04.2008**
(21) Numéro de dépôt: 03725270.7
(22) Date de dépôt: 06.03.2003
(51) Int. Cl.: C02F 1/24, B03D 1/14

(54) **PROCEDE ET DISPOSITIF DE CLARIFICATION DE LIQUIDES, NOTAMMENT D'EAUX, CHARGES DE MATIERES EN SUSPENSION**
VERFAHREN UND VORRICHTUNG ZUR KLÄRUNG VON SUSPENDSABELADENEN FLÜSSIGKEITEN, INSBESONDERE WASSER
METHOD AND DEVICE FOR CLARIFICATION OF LIQUIDS, PARTICULARLY WATER, LOADED WITH MATERIAL IN SUSPENSION

(30) Priorité: 12.03.2002 FR 0203066
(43) Date de publication de la demande: 08.12.2004
(73) Titulaire: DEGREMONT, 92508 Rueil-Malmaison Cédex (FR)
(72) Inventeur: VION, Patrick, F-78800 HOUILLES (FR)
(74) Mandataire: Michardière, Bernard
(86) Numéro de dépôt international: PCT/FR2003/000725
(87) Numéro de publication internationale: WO 2003/076343

(56) Documents cités:
- EP-A- 0 267 328
- WO-A-01/60494
- US-A- 5 169 004
- US-A- 5 900 154
- US-B1- 6 174 434

## Description

La présente invention concerne des perfectionnements apportés aux procédés de clarification, en particulier physico-chimiques, par flottation, des eaux chargées en matières en suspension.

La flottation est une technologie de clarification (séparation solide-liquide) qui constitue une alternative à la décantation, au moins pour certains types d'eau.

Selon cette technologie connue (voir notamment le « Memento Technique de l'Eau » 1989, Tome 1, pages 171 et suivantes), après une étape de coagulation-floculation, l'eau est mélangée avec un « lait » (c'est-à-dire une émulsion) de micro-bulles généralement d'air dont le diamètre moyen est compris entre 40 et 80 microns. Ces micro-bulles s'accrochent aux flocs qui, ainsi allégés, ont tendance à monter vers la surface de la cellule de flottation où ils s'accumulent pour former une nappe ou lit de boues. Les boues sont collectées en surface du flottateur, alors que l'eau clarifiée est évacuée par le fond de l'appareil.

Une partie de cette eau est pompée (débit généralement compris entre 5 et 15% du débit d'eau à traiter en clarification), à une pression de l'ordre de 4.10⁵ à 6. 10⁵ Pa dans un ballon spécifique, appelé ballon de pressurisation dans lequel l'air se dissout en grande quantité, c'est-à-dire jusqu'à 5 fois la concentration maximale de l'air dans l'eau à la pression atmosphérique. Lors d'une détente subite à la pression atmosphérique, l'air est placé en condition de sursaturation et génère des microbulles. Les systèmes de détente sont placés dans une zone spécifique dans laquelle est assuré le mélange des microbulles avec l'eau floculée.

Pour être physiquement séparé de l'eau dans un décanteur, un floc doit être dense ou de grande taille. Par contre, pour être séparé par flottation, il suffit que ledit floc soit bien formé : il peut être léger et de petite taille. La floculation peut donc être simplifiée, d'où l'absence quasi générale d'utilisation de polymère pour le traitement par flottation des eaux peu chargées et la mise en oeuvre de réacteurs plus petits que dans le cas des décantations situées en aval d'une floculation diffuse (par opposition aux décanteurs à lit de boues ou « lestés »).

Le point faible de la flottation est que les microbulles s'accrochent difficilement aux particules minérales et ne peuvent pas assurer la remontée à la surface des particules lourdes contenues dans l'eau. De ce fait, les applications de la flottation sont souvent limitées à la clarification des eaux peu chargées, en particulier à des eaux de lac, de forage, à l'eau de mer ou à des effluents industriels spécifiques ou aux eaux de lavage de filtres biologiques.

Parmi les autres particularités et avantages de la flottation, on peut citer notamment les suivants :
- le système de pressurisation est très simple et sa mise en régime s'effectue très rapidement. Les flottateurs démarrent presque instantanément : ce sont des appareils très simples à exploiter, même en marche syncopée ;
- les boues extraites sont concentrées : jusqu'à 10 à 40 g/l, si elles sont raclées ;
- les microbulles ont des vitesses ascensionnelles de 6 à 12 m/h, ce qui se traduit par des vitesses de clarification traditionnellement limitées entre 4 et 10 m/h.

Malgré leurs avantages, les flottateurs n'ont guère été en situation de concurrencer la génération des décanteurs rapides lamellaires, à lit de boues ou à lest, notamment pour les raisons suivantes :
- volume généralement surdimensionné de la zone de floculation ;
- vitesses de séparation relativement faibles ;
- coût énergétique de la pressurisation et
- domaine d'application relativement limité.

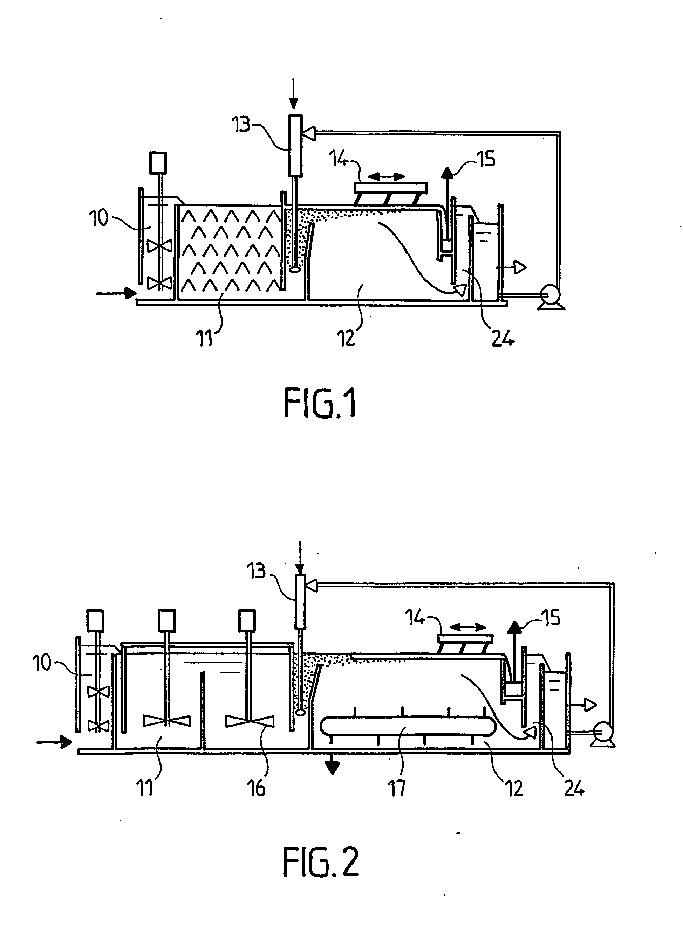

Cependant, depuis quelques années sont apparus des flottateurs rapides, grâce à la mise en oeuvre de modules lamellaires contre-courant ou de systèmes de reprise spécifiques (US 6174434, EP 0 659 690). Selon ces nouvelles techniques, des vitesses de clarification de l'ordre de 20 à 40 m/h pourraient être atteintes. Par ailleurs, des études de floculation ont montré que les floculateurs statiques ou hydrauliques (munis de séries de chicanes et de baffles) permettent, en réalisant une floculation-piston, de diviser par deux le temps nécessaire à la floculation par agitateur, par exemple dans certains cas de passer de 10 minutes à 5 minutes. Sur la figure 1 des dessins annexés, on a représenté un exemple de réalisation d'un flottateur mettant en oeuvre cette technique. Sur cette figure, la référence 10 désigne le coagulateur, la référence 11 le floculateur comportant une série de chicanes et de baffles et la référence 12 désigne la cellule de flottation. Le ballon de pressurisation est désigné par les références 13. Les matières en suspension qui s'accumulent à la surface de la cellule de flottation sont éliminées par un système de raclage de surface 14 et une sortie des boues en 15, l'eau clarifiée étant évacuée en 24 .

Dans une telle installation connue, assurant des durées de floculation réduites et des vitesses élevées dans le flottateur 12, la flottation peut devenir extrêmement compétitive par rapport à la décantation : l'objectif de l'Homme de l'art est aujourd'hui, de réaliser des flottateurs dont le temps de floculation est de l'ordre de 5 minutes, avec des vitesses de séparation de 30 à 40 m³/ m²·h.

La technologie de flottation fait donc un retour en force dans le cadre de la clarification des eaux peu chargées, compte tenu des coûts compétitifs de cette technologie vis-à-vis de celle de la décantation et également en raison de son évidente simplicité d'exploitation.

Par contre, l'inconvénient majeur de la flottation est que cette technique ne peut étendre son domaine d'application au vaste domaine des eaux des rivière, eaux résiduaires (primaires, pluviales, etc), eaux de lavages,... du fait de la difficulté, voire de l'impossibilité de « flotter » des "particules denses et/ou de grande taille. On a cependant tenté de réaliser des flottateurs susceptibles de fonctionner sur ces eaux difficiles. Les résultats obtenus restent cependant très médiocres tant en coût d'exploitation qu'en qualité de traitement. Il est alors nécessaire de mettre en oeuvre des systèmes d'agitation tels que des hélices pour éviter des dépôts dans les floculateurs et de prévoir un système de racleur de fond dans la cellule de flottation. La figure 2 des dessins annexés illustre un exemple de réalisation de ce type d'installation. On y a représenté en 16 les hélices positionnées dans le floculateur 11 et en 17 le racleur placé au fond de la cellule de flottation 12. L'inconvénient majeur de ce type de floculation par agitation mécanique est qu'il impose des floculateurs volumineux et entraîne une « inflation » des temps de séjour de l'effluent à traiter dans l'installation.

Par ailleurs, la décantation des flocs lourds au fond de la cellule de flottation 12 (où se situe la sortie de l'effluent traité) et leur remise en suspension lors du passage du racleur 17 produit une eau clarifiée de qualité médiocre.

Partant de l'état de la technique mentionné ci-dessus, la présente invention se propose de résoudre le problème technique Consistant à traiter par flottation des eaux contenant non seulement des particules flottables, mais également des particules lourdes non flottables, tout en maintenant une qualité optimale de l'eau clarifiée, en conservant la compacité de la zone de floculation hydraulique ou statique et en assurant un flottateur exempt de boues de fond.

Ce problème technique est résolu par un procédé de clarification par flottation des eaux chargées en matières en suspension, caractérisé en ce que le traitement de clarification s'effectue en deux étapes successives mises en oeuvre dans une seule installation :
- une étape de floculation statique à courant descendant, à laquelle est intégrée une étape de séparation primaire des particules les plus lourdes, la zone dans laquelle s'effectue l'étape de séparation primaire des particules les plus lourdes étant située sous la zone dans laquelle est mise en oeuvre l'étape de floculation statique et comportant une évacuation des particules les plus lourdes et
- une étape de flottation assurant l'élimination des particules légères dont la vitesse de décantation est inférieure au seuil de coupure du flottateur.

L'invention vise également un dispositif pour la mise en oeuvre du procédé tel que spécifié ci-dessus, ce dispositif étant caractérisé en ce qu'il comporte dans une même enceinte : un floculateur statique muni de chicanes et de baffles, un décanteur lamellaire positionné immédiatement en dessous du floculateur statique, les particules les plus lourdes issues de la décantation primaire étant évacuées à la partie inférieure du floculateur/décanteur, et un flottateur avec son système de pressurisation-détente générant les microbulles nécessaires à la flottation des particules les plus légères.

Ainsi qu'on le comprend, l'idée à la base de la présente invention est de réaliser la dernière étape de floculation sous forme de zone de floculation statique à courant descendant, à assurer sous celle-ci une séparation primaire équipée d'une évacuation des particules les plus lourdes, le tout en amont de la zone de flottation proprement dite : dans ces conditions, la cellule de flottation ne travaille que sur des particules légères, qu'elle élimine facilement.

D'autres caractéristiques et avantages de la présente invention ressortiront de la description faite ci-après, en référence aux dessins annexés qui en illustrent des exemples de réalisation dépourvus de tout caractère limitatif. Sur les dessins :

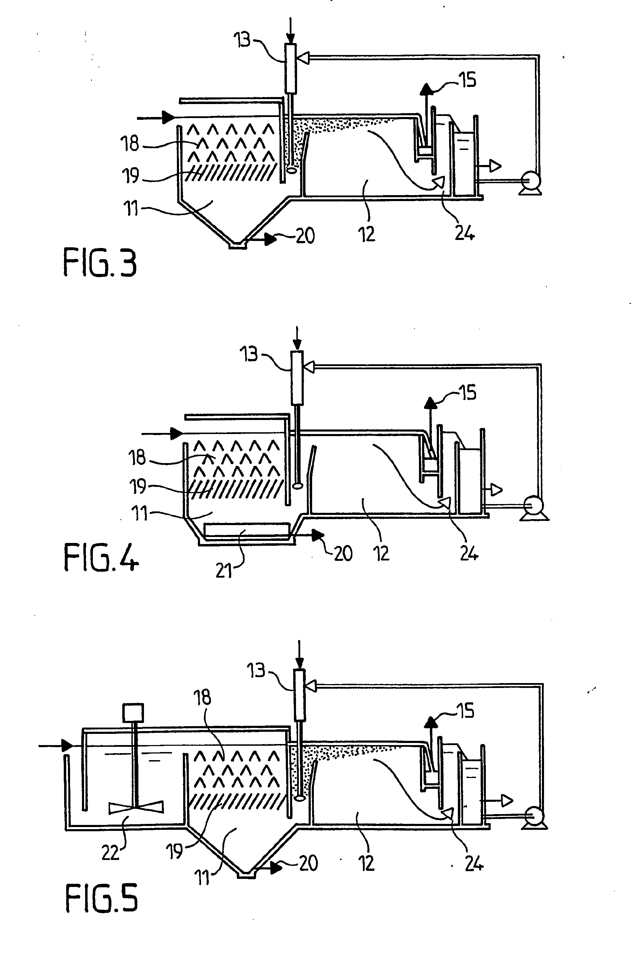

- les figures 3 à 5 représentent de façon schématique, en coupe verticale, des modes de réalisation d'une installation de clarification mettant en oeuvre le procédé de l'invention.

En se référant à la figure 1, on y retrouve le floculateur 11 et le flottateur 12 avec son moyen de raclage de surface 14. Selon l'invention, on prévoit en amont du flottateur 12 un floculateur statique à chicanes 18 sous lequel est placé un module de décantation lamellaire 19. L'ensemble réalisé par le floculateur 18 et le module de décantation lamellaire 19 constitue la zone de floculation statique à courant descendant-séparation primaire des particules les plus lourdes, ces dernières étant évacuées en 20 à la partie inférieure de cette zone.

Grâce à cette réalisation, l'invention permet de traiter la plupart des types d'eaux, y inclus celles contenant des particules trop légères pour décanter et trop lourdes pour flotter.

L'étage de modules de décantation lamellaire 19 situé sous les baffles ou chicanes du floculateur statique 18 assure, outre la décantation des particules les plus lourdes, deux fonctions complémentaires :
- en multipliant les surfaces de dépôt, il permet de capter des particules dont la vitesse de décantation est 5 à 20 plus faible que la vitesse de traversée de la cellule de flottation. La vitesse des plus petites particules retenues définit ce que l'on appelle, le pouvoir de coupure du décanteur ;
- en créant, à l'intérieur des modules lamellaires, un régime essentiellement laminaire, qui assure aux particules les plus légères et les plus fragiles une dernière étape de floculation à très basse énergie où elles pourront finir de « mûrir » et de se structurer.

Les particules plus lourdes se déposent à l'intérieur des tubes ou plaques des modules de décantation lamellaire 19. Ces modules font un angle, par rapport à l'horizontale, supérieur à l'angle de talutage des particules, c'est-à-dire que déposées sur ces modules, lesdites particules glissent progressivement vers le bas. Lors de ce déplacement, ces particules ou flocs vont rouler et s'agglomérer à d'autres particules. A la partie inférieure du module de décantation lamellaire 19, elles seront, donc, plus grosses, plus denses et leur vitesse de décantation propre sera considérablement plus grande. Dans ces conditions, au débouché du module de décantation lamellaire, elles n'auront aucun mal à traverser le flux hydraulique et à atteindre le fond du floculateur/décanteur où elles s'accumulent avant d'être évacuées en 20. Dans l'exemple de réalisation illustré par la figure 3, cette évacuation s'effectue par gravité, alors que dans le mode d'exécution de la figure 4 (par ailleurs identique au mode de réalisation de la figure 3), cette évacuation est réalisée par un système de raclage 21.

Le flux hydraulique qui est ensuite dirigé vers la cellule de flottation 12 est donc débarrassé des particules les plus lourdes qui ont été captées par le module de décantation lamellaire 19 et il n'est plus chargé que des particules légères qui ont été structurées pour la flottation à travers les étapes de la floculation statique (en 18) et de la floculation laminaire (en 19).

La floculation peut être une floculation mécanique sans réactif, c'est-à-dire que le floc se forme et grossit sous le simple effet de la turbulence de l'agitation, qui peut être induite par des dispositifs statiques (baffles, chicanes) ou mécaniques (hélices, agitateurs). C'est par exemple le cas avec des flocs biologiques.

Toutefois, la floculation est le plus souvent un phénomène physico-chimique. Elle comprend une première étape de coagulation au cours de laquelle les micro-particules (colloïdes) sont déstabilisées (leur potentiel Zeta est neutralisé) par l'adjonction d'un sel métallique (Fe+++ ou Al+++), ce qui va leur permettre de s'agglomérer et de grossir dans la deuxième étape, dite de floculation, pour former des flocs légers.

En général, cette étape suffit pour la flottation. Pour former des flocs plus denses, plus gros, aptes à la décantation, un polymère est injecté en tête de la floculation.

Dans l'exemple de réalisation illustré par la figure 5, l'installation mettant en oeuvre le procédé objet de l'invention comporte une cellule additionnelle de floculation mécanique 22 maintenue sous agitation, dans laquelle peut être injecté un floculant (polymère), cette cellule 22 étant positionnée à l'amont du floculateur statique 18-décanteur 19.

Afin que le procédé soit totalement efficace, c'est-à-dire pour qu'il permette d'atteindre 100% d'élimination des matières en suspension, il faut que la vitesse des particules retenues dans le floculateur-décanteur(vitesse qui correspond au pouvoir de coupure du décanteur), soit inférieure ou égale à la vitesse de décantation des particules flottables.

Afin d'illustrer cette caractéristique, on a donné ci-après quelques exemples :
1 - Si le floculateur 18-décanteur 19 retient les particules ayant des vitesses supérieures à 10 m/h (pouvoir de coupure du décanteur) et si le flottateur 12 ne peut « flotter » que les particules dont la vitesse de décantation est inférieure à 5 m/h, il en résultera que les particules dont les vitesses de décantation sont comprises entre 5 et 10 m/h, traverseront à la fois le floculateur-décanteur lamellaire, et le flottateur, pour venir finalement polluer l'eau clarifiée.
2 - Si par contre, le floculateur-décanteur retient les particules ayant des vitesses supérieures à 4 m/h et si le flottateur peut flotter les particules dont la vitesse de décantation est inférieure à 5 m/h, alors l'ensemble de l'installation (floculateur-décanteur + flottateur) aura retenu 100% des particules.
3 - Si le floculateur-décanteur retient les particules ayant des vitesses supérieures à 1 m/h et si le flottateur peut flotter les particules dont la vitesse de décantation est inférieure à 10 m/h, il est évident à nouveau que l'installation aura retenu 100 % des particules, mais force est de constater que ce dispositif est surdimensionné ou que les réactifs sont surdosés.

Sur la base d'un dimensionnement raisonnable de l'installation, il apparaît ainsi qu'il est possible de piloter cette dernière, selon l'invention, afin de couvrir le traitement de tous les types d'eau en jouant sur les doses respectives du coagulant et du floculant (polymère).

En ce qui concerne, les trois cas examinés dans les exemples ci-dessus, on fera les commentaires ci-après :
1 - Dans le premier cas, plusieurs voies sont offertes pour améliorer le fonctionnement : il est d'abord possible, en augmentant les doses de coagulant, de changer la structure des particules ou flocs les plus lourds sortant du floculateur-décanteur, de telle sorte qu'ils puissent flotter malgré des vitesses de décantation de 10 m/h. On peut aussi, côté floculateur, placer un module de décantation lamellaire plus performant pour avoir un pouvoir de coupure inférieur à 5 m/h (par exemple, en adoptant un plus petit diamètre ou une plus grande longueur pour les tubes constituant le module, ce qui entraine une augmentation de la surface de dépôt). Il est évidemment plus simple d'augmenter le dosage de polymère, de telle sorte que tous les flocs ou particules susceptibles de ne pas flotter aient une vitesse de décantation supérieure à 10 m/h.
2 - Dans le deuxième cas, on considère que les doses de réactifs et le dimensionnement sont convenablement choisis.
3 - Dans le troisième cas, il est clair qu'il y a surdosage. Il faut, soit réduire ou supprimer le floculant (polymère), soit réduire la dose de coagulant : le choix dépend de la filière de traitement. La réduction du coagulant est souvent économiquement plus intéressante. Mais la réduction du polymère limite le pouvoir colmatant de l'eau, facteur particulièrement critique si l'appareil est suivi d'un filtre ou d'un traitement sur membrane.

Il ressort des commentaires ci-dessus que l'invention permet de traiter quasiment tous les types d'eau et d'optimiser aisément le dosage des réactifs.

On décrira maintenant un exemple de mise en oeuvre du procédé objet de l'invention. Cet exemple se réfère à des essais qui ont été réalisés sur une eau de rivière relativement chargée, laquelle ne pouvait être traitée directement selon la technique de flottation conventionnelle.

Les caractéristique de l'eau brute traitée étaient les suivantes :
- température comprise entre 5 et 7°C ;
- matières en suspension : 60 à 195 g/ m³ ;
- turbidité 37 à 110 NTU.

On a utilisé une unité pilote de 30 m³/h du type illustré par la figure 5, c'est-à-dire comportant les caractéristiques principales suivantes :
- un mélangeur avec forte agitation mécanique, où est injecté le coagulant ;
- un étage de floculation mécanique par agitateur 22 où est injecté le polymère ou floculant ;
- un étage de floculation statique 18 présentant un temps de séjour de 4 minutes et une section de 0,8 m², et comprenant de haut en bas trois séries de baffles, sous lequel est disposé un décanteur lamellaire 19 et une trémie 23 de reprise des particules ou flocs décantés. Ce module lamellaire est formé de conduits de section hexagonale de 50 mm de hauteur et de 750 mm de long. Il développe une surface active de 8,7 m² par m² installé, ce qui signifie qu'il est capable de diviser par 8,7 la vitesse des plus petites particules retenues par ce décanteur (cf loi de Hazen) . La vitesse apparente dans le floculateur ne peut retenir que les particules décantant à plus de 37,5 m/h (30 m³/h / 0,8 m²) . Grâce au module de décantation lamellaire 19, il est possible de retenir des particules décantant à 37,5 / 8,7 = 4,3 m/h ou plus, (pouvoir de coupure du module de décantation lamellaire ;
- la cellule de flottation proprement dite 12 présentant une surface de section de 1 m². La vitesse apparente sur cette section est donc de 30 m/h.

Par ailleurs, cette unité pilote était équipée d'un système de pressurisation détente, désigné par la référence 13 générant des microbulles de diamètre inférieur à 100 µm qui sont mélangées à l'eau floculée entrant dans la cellule de flottation 12.

Pour différents dosages de réactif, les résultats obtenus sur cette unité pilote sont les suivants :
1 - Coagulant = 25 g/m³ et polymère = 0,2 g/m³
   Eau traitée :
   - Turbidité = 0,6 à 1.1 NTU
   - Matières en suspension = 0,9 à 2 g/m³
2 - Coagulant = 25 g/m³ et polymère = 0 g/m³
   Eau traitée :
   - Turbidité = 2 à 4 NTU
   - Matières en suspension = 5 à 9,8 g/m³
3 - Coagulant = 50 g/m³ et polymère = 0 g/m³
   Eau traitée :
   - Turbidité = 1 à 1,9 NTU
   - Matières en suspension = 2,5 à 4,2 g/m³
4 - Coagulant = 50 g/m³ et polymère = 0,2 g/m³
   Eau traitée :
   - Turbidité = 0,4 à 0,9 NTU
   - Matières en suspension = 0,9 à 1,8 g/m³

En conclusion, les résultats pratiques obtenus sur cette unité pilote ont permis de vérifier que :
- le procédé selon l'invention permet d'obtenir un rendement d'élimination des matières en suspension supérieur à 90%, même sur des eaux relativement chargées ;
- le réglage des doses respectives de coagulant et de floculant permet d'adapter les performances respectives du floculateur-décanteur et du flottateur ;
- les résultats de l'essai n° 4 sont, en valeur absolue, les plus satisfaisants, mais au prix d'une consommation élevée de coagulant (surdose). Les meilleures conditions opératoires sont celles de l'essai n° 1.
- au moins dans le cas des caractéristiques d'eau brute mentionnées ci-dessus, il est vérifié que l'absence ou l'insuffisance de floculant ne permet pas au floculateur-décanteur de retenir convenablement les particules lourdes.

On peut, sans sortir du cadre de la présente invention, envisager diverses variantes de mise en oeuvre et/ou de réalisation.

Ainsi, dans tous les cas où une coagulation physico-chimique est nécessaire, la cellule de floculation peut être précédée d'une zone de mélange à forte énergie pour mélanger le coagulant (réacteur avec agitateur, réacteur statique ascensionnel à forte perte de charge, mélangeur en ligne, déversoir, etc). Le floculant (polymère), s'il est nécessaire, est injecté à la sortie de la zone de mélange ou dans le premier floculateur agité. Cette variante correspond à la figure 5 examinée ci-dessus.

Suivant la taille de la cellule de floculation-décantation, l'évacuation des boues de fond se fait, soit à travers une trémie 23 (figures 3 et 5), soit par l'intermédiaire d'un racleur 21 (figure 4), soit par tout autre système d'extraction de boues, connu de l'Homme de l'art.

Si le temps de séjour l'impose, la cellule de floculation statique peut être précédée d'un ou plusieurs étages de floculation avec agitateur. Ces cellules sont agitées pour éviter les dépôts.

Quand un effluent à traiter présente une charge élevée en matières en suspension, les performances du flottateur sont limitées par le flux massique à évacuer (kg/m².h). La vitesse de traitement est alors réduite proportionnellement audit flux massique.

On comprend de la description qui précède que le procédé selon l'invention permet d'éliminer une partie de la charge en matières en suspension dans le floculateur-décanteur, en augmentant la dose de floculant (polymère). Le flux massique sur le flottateur est aussi notablement réduit, ce qui lui permet de fonctionner à grande vitesse en assurant un rôle de finition. Ainsi, grâce à l'invention qui consiste à combiner deux étapes de traitement, floculation - décantation et flottation, toute particule en suspension, non retenue au niveau du floculateur-décanteur, présente une vitesse de décantation inférieure à la vitesse de flottation, ce qui permet d'assurer son élimination lors de l'étape de flottation.

Le procédé tel que décrit va à l'encontre de la tendance des préjugés de l'Homme de l'art qui, chaque fois qu'il est question de flottation, cherchera à utiliser des réactifs susceptibles d'alléger le floc, alors qu'au contraire l'invention recherche la densification des particules lourdes, en particulier.

De plus, afin de rechercher la compacité maximale des installations, et toujours à l'encontre de la tendance de l'Homme de l'art, l'invention met en oeuvre un système de décantation lamellaire, conçu pour n'être que partiellement efficace (les lamellaires sont normalement utilisé en séparation fine ...) et utilise l'étage de flottation comme une étape de finition.

Il demeure bien entendu que la présente invention n'est pas limitée aux exemples de réalisation décrits et représentés ci-dessus, mais qu'elle en englobe toutes-les variantes. C'est ainsi que le dispositif selon l'invention peut comporter, à l'amont du floculateur-décanteur, un mélangeur ou un moyen d'injection en ligne pouvant être prévu par exemple sur le déversoir alimentant ce floculateur-décanteur.

## Revendications

1. - Procédé de clarification par flottation des eaux chargées en matières en suspension, **caractérisé en ce que** le traitement de clarification s'effectue en deux étapes successives mises en oeuvre dans une seule installation :
- une étape de floculation statique à courant descendant, à laquelle est intégrée une étape de séparation primaire des particules les plus lourdes, la zone dans laquelle s'effectue l'étape de séparation primaire des particules les plus lourdes étant située sous la zone dans laquelle est mise en oeuvre l'étape de floculation statique et comportant une évacuation des particules les plus lourdes, les vitesses de décantation des particules les plus lourdes, retenues lors de cette étape de floculation statique/séparation primaire, étant inférieures ou égales aux vitesses de décantation des particules flottables,
- une étape de flottation assurant l'élimination des particules légères dont la vitesse de décantation est inférieure au seuil de coupure du flottateur,
- l'étape de floculation statique étant prévue en amont de l'étape de flottation.

2. - Procédé selon la revendication 1, **caractérisé en ce que** l'étape de floculation est précédée d'une étape de mélange sous forte énergie pour l'introduction d'un ou plusieurs réactifs (coagulant, polymère,...)

3. - Procédé selon l'une quelconque des revendications précédentes, **caractérisé en ce que** l'étape de floculation statique est précédée d'une ou de plusieurs étapes de floculation sous agitation.

4. - Dispositif pour la mise en oeuvre du procédé selon l'une quelconque des revendications précédentes, **caractérisé en ce qu'**il comporte dans une même enceinte : un floculateur statique (18) muni de chicanes et de baffles, un décanteur lamellaire (19) positionné immédiatement en dessous du floculateur statique (18), les particules les plus lourdes issues de la décantation primaire étant évacuées à la partie inférieure du floculateur/décanteur, le floculateur statique (18) étant prévu en amont d'un flottateur (12) qui comprend un système de pressurisation-détente (13) générant les microbulles nécessaires à la flottation des particules les plus légères.

5. - Dispositif selon la revendication 4, **caractérisé en ce qu'**il comporte en outre une ou plusieurs cellules de floculation mécanique (22) maintenue sous agitation, dans laquelle s'effectue l'injection de floculant, ladite cellule étant interposée entre le coagulateur (10) et le floculateur statique (18)-décanteur lamellaire (19).

6. - Dispositif selon la revendication 4 **caractérisé en ce qu'**il comporte à l'amont du floculateur-décanteur, un mélangeur ou un moyen d'injection en ligne pouvant être positionné sur le déversoir alimentant ce floculateur-décanteur.

## Claims

1. A method for clarifying, by flotation, waters contaminated with suspended matter, **characterized in that** the clarification treatment takes place in two successive steps implemented in a single installation:
- a downflow static flocculation step, which incorporates a primary separation step of the heavier particles, the zone in which the primary separation step of the heavier particles is carried out being situated under the zone in which the static flocculation step is implemented, and comprising a removal of the heavier particles, the settling rates of the heavier particles retained during this static flocculation/primary separation step being less than or equal to the settling rates of the floatable particles,
- a flotation step which removes the light particles of which the settling rate is lower than the flotation cutoff threshold,
- the static flotation step being provided upstream of the flotation step.

2. The method as claimed in claim 1, **characterized in that** the flocculation step is preceded by a high-energy mixing step for the introduction of one or more reagents (coagulant, polymer, etc).

3. The method as claimed in any one of the preceding claims, **characterized in that** the static flocculation step is preceded by one or more flocculation steps with stirring.

4. A device for implementing the method as claimed in any one of the preceding claims, **characterized in that** it comprises in the same enclosed space: a static flocculator (18) equipped with deflectors and baffles, a lamellar settler (19) positioned immediately below the static flocculator (18), the heavier particles issuing from the primary settling being removed at the bottom portion of the flocculator/settler, the static flocculator (18) being provided upstream of a flotation unit (12) that comprises a pressurization-expansion system (13) generating the microbubbles necessary for the flotation of the lighter particles.

5. The device as claimed in claim 4, **characterized in that** it further comprises one or more mechanical flocculation cells (22) maintained under stirring, into which flocculant is injected, said cell being inserted between the coagulator (10) and the static flocculator (18) /lamellar settler (19).

6. The device as claimed in claim 4, **characterized in that** it comprises, upstream of the flocculator-settler, a mixer or an in-line injection means which can be positioned on the weir supplying this flocculator-settler.

## Patentansprüche

1. Verfahren zum Klären von mit Schwebstoffen belasteten Wässern durch Flotation, **dadurch gekennzeichnet, dass** die Klärbehandlung in zwei aufeinanderfolgenden, in einer einzigen Anlage durchgeführten Schritten erfolgt:
- einem Schritt zur statischer Ausflockung mit Abwärtsstrom, in den ein Schritt zur Primärabscheidung der schwersten Teilchen integriert ist, wobei der Bereich, in dem der Schritt der Primärabscheidung der schwersten Teilchen erfolgt, unter dem Bereich liegt, in dem der Schritt der statischen Ausflockung durchgeführt wird, und ein Abführen der schwersten Teilchen umfasst, wobei die Absetzgeschwindigkeiten der schwersten Teilchen, die bei diesem Schritt der statischen Ausflockung/Primärabscheidung zurückgehalten werden, geringer als die oder gleich den Absetzgeschwindigkeiten der schwimmfähigen Teilchen sind,
- einem Flotationsschritt, der die Entfernung der leichten Teilchen sicherstellt, deren Absetzgeschwindigkeit geringer als die Trenngrenze der Flotationsvorrichtung ist,
- wobei der Schritt der statischen Ausflockung stromaufwärts des Flotationsschrittes vorgesehen ist.

2. Verfahren nach Anspruch 1, **dadurch gekennzeichnet, dass** dem Ausflockungsschritt ein Schritt zum Mischen unter hoher Energie für das Einleiten eines oder mehrerer Reagenzien (Koagulans, Polymer etc.) vorangeht.

3. Verfahren nach irgendeinem der vorhergehenden Ansprüche, **dadurch gekennzeichnet, dass** dem Schritt des statischen Ausflockens ein oder mehrere Schritt(e) des Ausflockens unter Rühren vorangehen.

4. Vorrichtung zur Durchführung des Verfahrens nach irgendeinem der vorhergehenden Ansprüche, **dadurch gekennzeichnet, dass** sie in einem einzigen Behälter folgendes umfasst, nämlich einen mit Ablenkblechen und Stromstörern versehenen statischen Ausflocker (18), einen Lamellenabscheider (19), der unmittelbar unterhalb des statischen Ausflockers (18) angeordnet ist, wobei die aus der Vorklärung hervorgegangenen schwersten Teilchen am unteren Teil des Ausflockers-Abscheiders abgeführt werden, wobei der statische Ausflocker (18) stromaufwärts einer Flotationsvorrichtung (12) vorgesehen ist, die ein System zur Druckbeaufschlagung-Druckentlastung (13) umfasst, das die für die Flotation der leichtesten Teilchen erforderlichen Mikrobläschen erzeugt.

5. Vorrichtung nach Anspruch 4, **dadurch gekennzeichnet, dass** sie ferner eine oder mehrere unter Rühren gehaltene Zelle(n) (22) zur mechanischen Ausflockung umfasst, in die das Einspritzen eines Flockungsmittels erfolgt, wobei die genannte Zelle zwischen dem Koagulator (10) und dem statischen Ausflocker (18) - Lamellenabscheider (19) angeordnet ist.

6. Vorrichtung nach Anspruch 4, **dadurch gekennzeichnet, dass** sie stromaufwärts des Ausflockers-Abscheiders einen Mischer oder ein Reiheneinspritzmittel umfasst, das an dem diesen Ausflocker-Abscheider versorgenden Überlauf angeordnet werden kann.
